# EUROPEAN PATENT SPECIFICATION

(11) **EP 3 027 870 B1**
(45) Date of publication and mention of the grant of the patent: **15.05.2019**
(21) Application number: 14850140.6
(22) Date of filing: 17.07.2014
(51) Int. Cl.: F02C 7/28, F01D 11/00, F04D 29/08, F01D 11/08, F16J 15/28

(54) **GAS TURBINE ENGINE NON-ROTATING STRUCTURE WEDGE SEAL**
KEILDICHTUNG MIT DREHSCHUTZ FÜR GASTURBINENMOTOR
DISPOSITIF D'ÉTANCHÉITÉ CUNÉIFORME À STRUCTURES NON ROTATIVES D'UN MOTEUR À TURBINE À GAZ

(30) Priority: 02.08.2013 US 201361861531 P
(43) Date of publication of application: 08.06.2016
(73) Proprietor: United Technologies Corporation, Farmington, CT 06032 (US)
(72) Inventor: RYAN, Kevin J., Alfred, Maine 04002 (US); MENTZ, Karl A., Reading, MA 01867 (US); ROGERS, Mark J., Kennebunk, Maine 04043 (US)
(74) Representative: Dehns
(86) International application number: PCT/US2014/046935
(87) International publication number: WO 2015/050624

(56) References cited:
- EP-A1- 2 028 398
- WO-A1-91/10826
- WO-A1-2014/051700
- US-A- 5 292 138
- US-A1- 2004 219 014
- US-A1- 2006 038 355
- US-A1- 2013 051 993

## Description

### BACKGROUND

This disclosure relates to a gas turbine engine, and more particularly to a wedge seal for used between non-rotating structures of a gas turbine engine.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes guide the airflow and prepare it for the next set of blades.

Seals are used in a variety of locations within the gas turbine engine to separate cooling fluid from the core path flow for example. Seals that are used in the turbine section, for example, must withstand large differential pressures, temperature gradients and relative movement between components. One such seal is utilized between non-rotating structures, such as between a blade outer air seal and a turbine vane. Typically an M-shaped or W-shaped annular seal is provided between the blade outer air seal and turbine vane. The seals are constructed from a thin sheet of corrugated stainless steel that can wear or lose its resilience and sealing efficiency over time.

WO 91/10826 discloses a prior art seal assembly according to the preamble of claim 1 and a prior art method according to the preamble of claim 11.

### SUMMARY

According to a first aspect of the present invention, there is provided a seal assembly as set forth in claim 1.

In an embodiment of the above, the stator vane is arranged in a turbine section.

In a further embodiment of the above, a pocket is provided in at least one of the stator vane and the blade outer air seal. The sealing assembly is arranged in the pocket.

In a further embodiment of the above, the pocket is provided in an outer platform of the stator vane.

In a further embodiment of the above, a pocket is provided in at least one of the first and second non-rotating structures. The sealing assembly is arranged in the pocket.

In a further embodiment of the above, at least one of the first and second sealing rings includes free and compressed conditions corresponding to uninstalled and installed conditions. At least one sealing ring has free ends spaced apart from another in the compressed condition.

In a further embodiment of the above, one of the free ends includes a protrusion and the other of the free ends includes a slot receiving the protrusion.

In a further embodiment of the above, the first and second sealing rings are constructed from a metal alloy.

In a further embodiment of the above, at least one surface of at least one of the first and second sealing rings includes a hard coat.

In a further embodiment of the above, at least one surface of at least one of the first and second sealing rings includes a lubrication coating.

In a further embodiment of the above, a surface of at least one of the first and second sealing rings includes a ridge that engages the other of the first and second sealing rings.

In a further embodiment of the above, another surface of the other of the first and second sealing rings includes another ridge that engages the surface of at least one of the first and second sealing rings.

In a further embodiment of the above, the sliding wedge interface is provided by first and second angled surfaces respectively provided by the first and second sealing rings. The first and second angled surfaces canted relative to an axis of the first and second sealing rings.

According to a further aspect of the present invention, there is provided a method as set forth in claim 11.

In an embodiment of the above, the stator vane is arranged in a turbine section.

In a further embodiment of the above, a pocket is provided in at least one of the stator vane and the blade outer air seal. The sealing assembly is arranged in the pocket.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a cross-sectional view through a high pressure turbine section.
Figure 3A illustrates the disclosed seal assembly in a first position.
Figure 3B illustrates the seal assembly in a second position.
Figure 4A schematically illustrates one example sealing ring.
Figure 4B is an enlarged perspective view of free ends of the sealing ring shown in Figure 4A.
Figure 4C is a plan view of the ends of the sealing ring shown in Figure 4B.
Figure 5 illustrates a portion of one example sealing ring.
Figure 6A-6C illustrates example sealing ring sliding interfaces.

### DETAILED DESCRIPTION

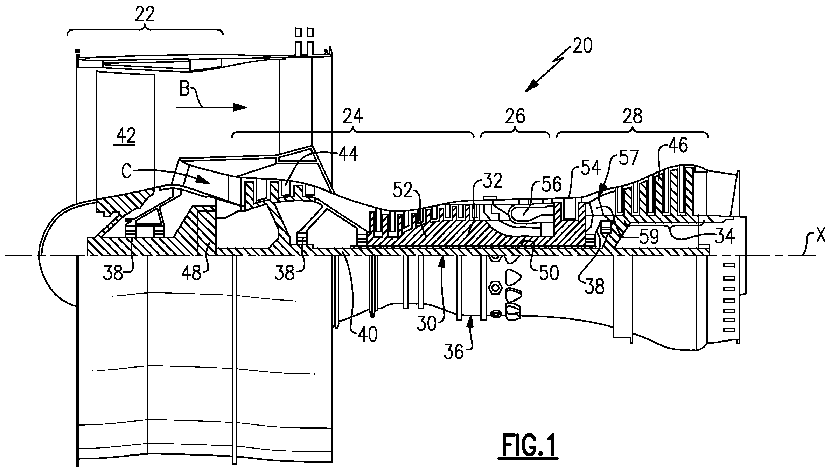

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis X.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed", as disclosed herein according to one non-limiting embodiment, is less than about 1150 ft/second (350.5 m/s).

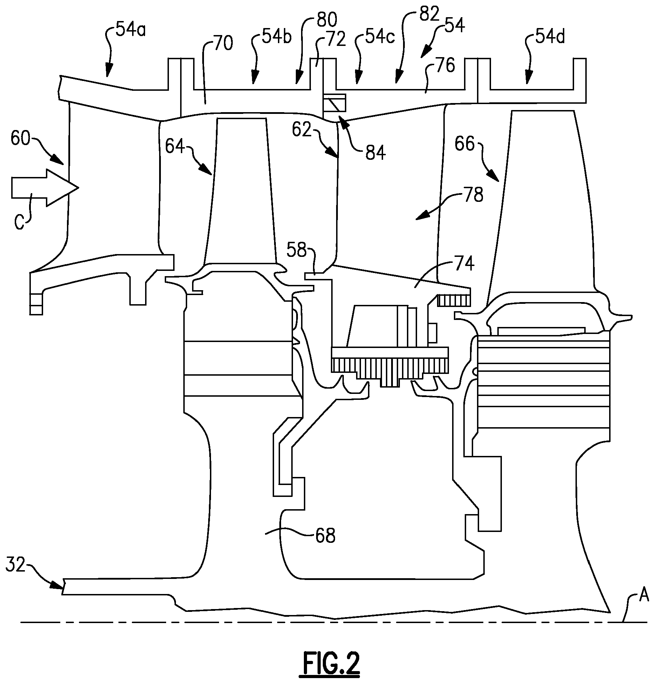

Referring to Figure 2, a cross-sectional view through a high pressure turbine section 54 is illustrated, although the disclosed seal assembly can be used in other sections. In the example high pressure turbine section 54, first and second arrays 54a, 54c of circumferentially spaced stator vanes 60, 62 are axially spaced apart from one another. A first stage array 54b of circumferentially spaced turbine blades 64, mounted to a rotor disk 68, is arranged axially between the first and second stator vane arrays 54a, 54c. A second stage array 54d of circumferentially spaced turbine blades 66 is arranged aft of the second array 54c of stator vanes 62.

The turbine blades each include a tip adjacent to a blade outer air seal 70 of a case structure 72. The first and second stage arrays 54a, 54c of turbine vanes and first and second stage arrays 54b, 54d of turbine blades are arranged within a core flow path C and are operatively connected to a spool 32.

Each stator vane 62 includes an inner platform 74 and an outer platform 76 respectively defining inner and outer flow paths. The platforms 74, 76 are interconnected by an airfoil 78 extending in a radial direction. It should be understood that the turbine vanes may be discrete from one another or arranged in integrated clusters. Multiple stator vanes 62 are arranged circumferentially in a circumferential direction. The stator vanes 62 are fixed with respect to the case structure in that the stator vanes 62 are non-rotating about the axis A. The stator vanes 62 may rotate with respect to their radial axis.

A seal assembly 84 is schematically illustrated generically between first and second non-rotating structures 80, 82, which are provided by the blade outer air seal 54b and the stator vane 54c in the example shown in Figure 2. However, it should be understood that the seal assembly 84 may be provided between other structures and in other sections of the engine, for example, in the compressor section.

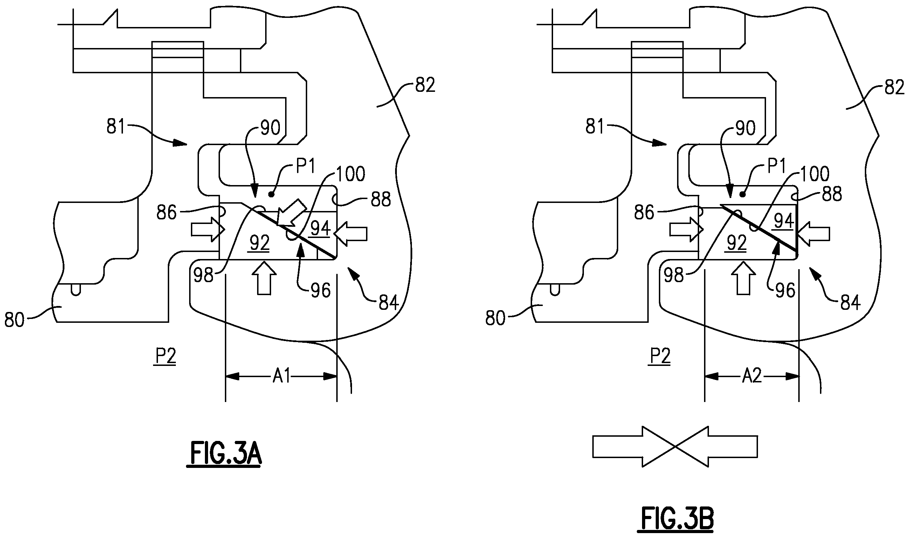

Referring to Figures 3A and 3B, the seal assembly 84 is shown in more detail. The seal assembly 84 is subject to a pressure gradient provided by first and second pressurized areas PI, P2. The seal assembly 84 is also subject to loads from movement of the first and second non-rotating structures 80, 82 relative to one another during engine operation due to loads and thermal growth of the various engine components.

The seal assembly 84 seals against first and second faces 86, 88 respectively provided by the first and second non-rotating structures 80, 82. In one example, the seal assembly 84 is arranged within a pocket 90 of the second non-rotating structure, for example, in the outer platform 76 of the stator vane 62.

The seal assembly 84 includes first and second sealing rings 92, 94 that are moveable with respect to one another along a sliding wedge interface 96. The sliding wedge interface 96 is provided by first and second angled surfaces 98, 100 respectively provided by the first and second sealing rings 92, 94. The angled surfaces are canted relative to the axis A about which the first and second sealing rings are arranged.

In Figure 3A, the first and second sealing rings 92, 94 provide a first width A1 in a first sealing position. Differential pressure and forces from the first and second non-rotating structure 80, 82 moving axially relative to one another may move the first and second sealing rings 92, 94 to a second sealing position, shown in Figure 3B, providing a second width A2 different than the first width A1. In both the first and second positions, the first and second sealing rings 92, 94 will remain in engagement with the first and second faces 86, 88 which seals the first and second pressurized areas PI, P2 from one another. The differential pressures enhance the sealing between the first and second sealing rings 92, 94 as the first and second angled surfaces 98, 100 are biased toward one another by the high pressure side of the first and second pressurized areas PI, P2, which forces the first and second sealing rings 92, 94 into the first and second faces 86, 88.

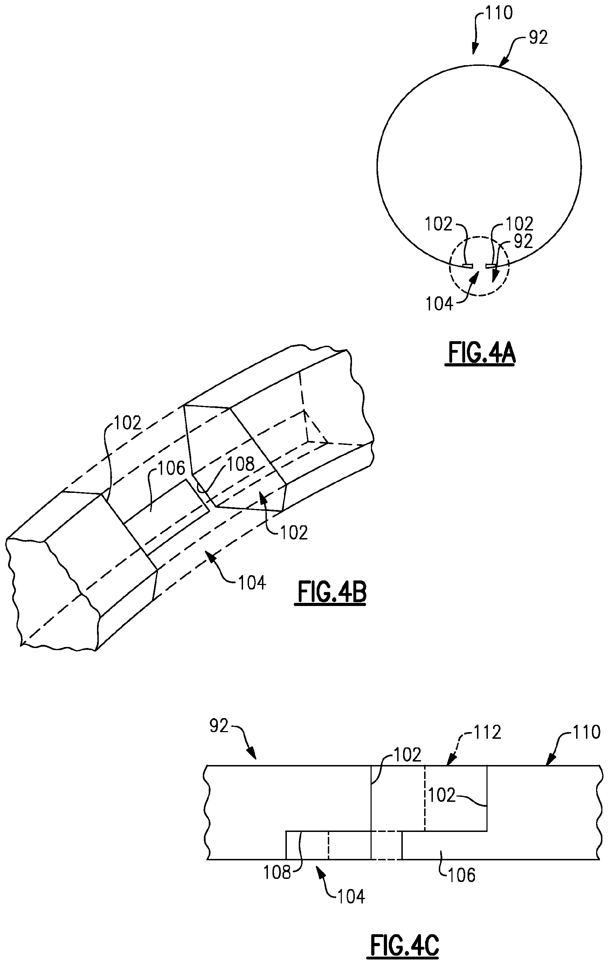

Referring to Figures 4A-4C, one of the first and second sealing rings 92, 94 is used to illustrate one example feature. It should be understood that the first and second sealing rings 92, 94 are interchangeable. The first sealing ring 92 includes opposing free ends 102 spaced from one another to provide a space 104 in a free condition 110 corresponding to an uninstalled condition. One of the free ends 102 includes a protrusion 106 that cooperates with a complementary shaped slot 108 in a compressed condition 112 corresponding to an installed condition, shown in phantom in Figure 4C, and in which the space 104 is smaller. The protrusion 106 and slot 108 provides a seal at the interface of the opposing free ends 102 from the second pressurized area P2 (Figures 3A and 3B), for example. As a result, the second sealing ring 94 may not need to provide such a sealing structure.

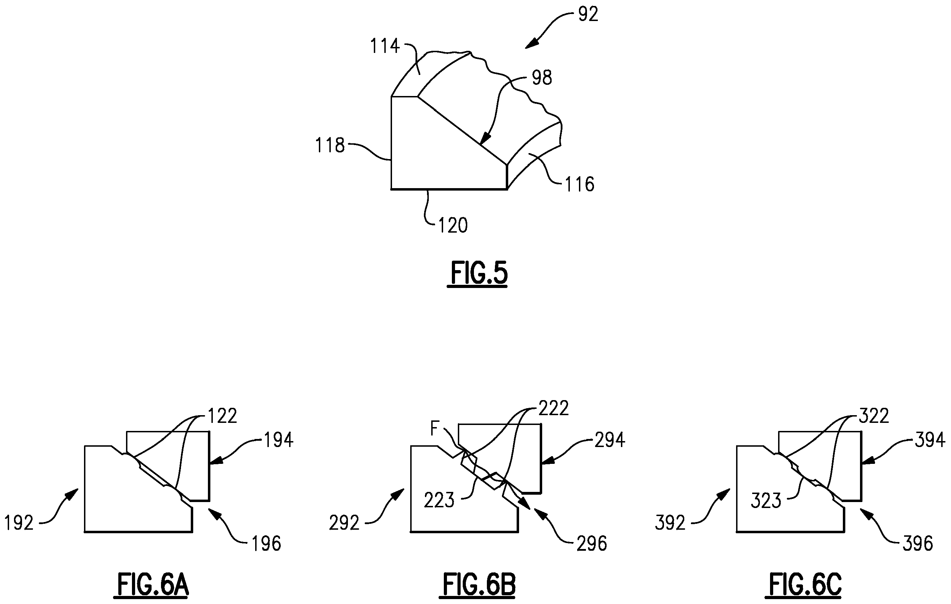

The sealing rings may be constructed from a high temperature metal alloy, such as Inconel 718 or WASPALOY. Referring to Figure 5, at least one of the first and second sealing rings, such as the first sealing ring 92, may include more and more surface treatments to improve wearability. For example, the first angled surface 98 may include a hard coat and/or lubrication coating to lower the coefficient of friction. First and second surfaces 114, 116 may also include a hard coat, however, the surfaces do not directly engage the other sealing ring or supporting surfaces. The third and fourth surfaces 118, 120 may include a hard coat as the surfaces engage the adjacent supporting structure.

Example configurations are shown in Figure 6A-6C, which reduce the friction at the sliding interface between the sealing rings. In the example shown in Figure 6A, the first sealing ring 192 includes spaced apart ridges 122 that engage the second sealing ring 194 at the sliding wedge interface 196. The profile of the ridges 122 is curved. A similar arrangement is shown in Figure 6C, but the second sealing ring 394 includes a ridge 323 that is provided between the ridges 322 on the first sealing ring 392 to further enhance sealing at the sliding wedge interface 396.

The configuration illustrated in Figure 6B includes knife edge seals having a more pointed profile. The ridges 222 on the first sealing ring 292 cooperate with the ridge 223 block flow F from passing through the sliding wedge interface 296 between the first and second sealing rings 292, 294. It should be understood that any number, shape and configuration of ridges may be used.

Although an example embodiment has been disclosed, a worker of ordinary skill in this art would recognize that certain modifications would come within the scope of the claims. For that reason, the following claims should be studied to determine their true scope and content.

## Claims

1. A seal assembly arrangement for a gas turbine engine (20) comprising:
first and second non-rotating structures (80, 82) respectively providing first and second faces (86, 88);
a sealing assembly (84) includes first and second sealing rings (92, 94; 192, 194; 292, 294; 392, 394) respectively engaging the first and second faces (86, 88), the first and second sealing rings (92, 94; 192, 194; 292, 294; 392, 394) slideably engaging one another at a sliding wedge interface (96; 196; 296; 396), wherein the sealing assembly (84) separates first and second pressurized areas (P1, P2) from one another,
**characterised in that**:
the first non-rotating structure (80) is a blade outer air seal and the second non-rotating structure (82) is a stator vane, and one of the first and second pressurized areas (P1, P2) corresponds to a core flow path (C).

2. The seal assembly arrangement according to claim 1, wherein a pocket (90) is provided in at least one of the first and second non-rotating structures (80, 82), the sealing assembly (84) arranged in the pocket (90).

3. The seal assembly arrangement according to claim 1 or 2, wherein at least one of the first and second sealing rings (92, 94; 192, 194; 292, 294; 392, 394) includes free and compressed conditions (110, 112) corresponding to uninstalled and installed conditions, the at least one sealing ring (92, 94; 192, 194; 292, 294; 392, 394) having free ends (102) spaced apart from another in the compressed condition (112).

4. The seal assembly arrangement according to claim 3, wherein one of the free ends (102) includes a protrusion (106) and the other of the free ends (102) includes a slot (108) receiving the protrusion (106).

5. The seal assembly arrangement according to any preceding claim, wherein the first and second sealing rings (92, 94; 192, 194; 292, 294; 392, 394) are constructed from a metal alloy.

6. The seal assembly arrangement according to claim 5, wherein at least one surface (98, 100, 114, 116, 118, 120) of at least one of the first and second sealing rings (92, 94; 192, 194; 292, 294; 392, 394) includes a hard coat.

7. The seal assembly arrangement according to claim 5 or 6, wherein at least one surface (98, 100, 114, 116, 118, 120) of at least one of the first and second sealing rings (92, 94; 192, 194; 292, 294; 392, 394) includes a lubrication coating.

8. The seal assembly arrangement according to claim 5, 6 or 7, wherein a surface (98, 100) of at least one of the first and second sealing rings (92, 94; 192, 194; 292, 294; 392, 394) includes a ridge (122; 222; 322) engaging the other of the first and second sealing rings (92, 94; 192, 194; 292, 294; 392, 394).

9. The seal assembly arrangement according to claim 8, wherein another surface (98, 100) of the other of the first and second sealing rings (292; 392) includes another ridge (223; 323) that engages the surface (98, 100) of the at least one of the first and second sealing rings (223; 323).

10. The seal assembly arrangement according to any preceding claim, wherein the sliding wedge interface (96; 196; 296; 396) is provided by first and second angled surfaces (98, 100) respectively provided by the first and second sealing rings (92, 94; 192, 194; 292, 294; 392, 394), the first and second angled surfaces (98, 100) canted relative to an axis of the first and second sealing rings (92, 94; 192, 194; 292, 294; 392, 394).

11. A method of sealing between two gas turbine engine components, comprising the steps of:
arranging first and second sealing rings (92, 94; 192, 194; 292, 294; 392, 394) between first and second non-rotating structures (80, 82); and
biasing the first and second sealing rings (92, 94; 192, 194; 292, 294; 392, 394) into engagement with one another at a sliding wedge interface (96, 196, 296, 396) and into engagement with the first and second non-rotating structures (80, 82) to form a sealing assembly (84), wherein the sealing assembly (84) separates first and second pressurized areas (P1, P2) from one another,
**characterised in that**:
the first non-rotating structure (80) is a blade outer air seal and the second non-rotating structure (82) is a stator vane, wherein one of the first and second pressurized areas (P1, P2) corresponds to a core flow path (C).

12. The method or seal assembly arrangement according to any preceding claim, wherein the stator vane is arranged in a turbine section (24).

13. The method or seal assembly arrangement according to claims 11 or 12, wherein a pocket (90) is provided in at least one of the stator vane and the blade outer air seal, and the sealing assembly (84) is arranged in the pocket (90).

14. The seal assembly arrangement according to claim 13, wherein the pocket (90) is provided in an outer platform (76) of the stator vane (62).

## Patentansprüche

1. Dichtungsbaugruppenanordnung für ein Gasturbinentriebwerk (20), die Folgendes umfasst:
einen ersten und einen zweiten Drehschutz (80, 82), die jeweils eine erste und eine zweite Fläche (86, 88) bereitstellen;
eine Dichtbaugruppe (84), die einen ersten und einen zweiten Dichtring (92, 94; 192, 194; 292, 294; 392, 394) einschließt, die jeweils die erste und die zweite Fläche (86, 88) in Eingriff nehmen, wobei der erste und der zweite Dichtring (92, 94; 192, 194; 292, 294; 392, 394) einander an einer Schieberkeil-Schnittstelle (96; 196; 296; 396) verschiebbar in Eingriff nehmen, wobei die Dichtbaugruppe (84) eine erste und eine zweite unter Druck stehende Region (P1, P2) voneinander trennt,
**dadurch gekennzeichnet, dass**:
der erste Drehschutz (80) eine Außenluftdichtung einer Schaufel ist und der zweite Drehschutz (82) eine Statorleitschaufel ist, und wobei eine von der ersten und der zweiten unter Druck stehenden Region (P1, P2) einem Kernströmungsweg (C) entspricht.

2. Dichtungsbaugruppenanordnung nach Anspruch 1, wobei eine Tasche (90) in mindestens einem von dem ersten und dem zweiten Drehschutz (80, 82) bereitgestellt ist, wobei die Dichtbaugruppe (84) in der Tasche (90) angeordnet ist.

3. Dichtungsbaugruppenanordnung nach Anspruch 1 oder 2, wobei mindestens eines von dem ersten und dem zweiten Dichtring (92, 94; 192, 194; 292, 294; 392, 394) einen freien und einen komprimierten Zustand (110, 112) einschließt, die einem nicht installierten und einem installierten Zustand entsprechen, wobei der mindestens eine Dichtring (92, 94; 192, 194; 292, 294; 392, 394) freie Enden (102) aufweist, die in dem komprimierten Zustand (112) voneinander beabstandet sind.

4. Dichtungsbaugruppenanordnung nach Anspruch 3, wobei eines der freien Enden (102) einen Vorsprung (106) einschließt und das andere der freien Enden (102) einen Schlitz (108) einschließt, der den Vorsprung (106) aufnimmt.

5. Dichtungsbaugruppenanordnung nach einem der vorhergehenden Ansprüche, wobei der erste und der zweite Dichtring (92, 94; 192, 194; 292, 294; 392, 394) aus einer Metalllegierung aufgebaut sind.

6. Dichtungsbaugruppenanordnung nach Anspruch 5, wobei mindestens eine Oberfläche (98, 100, 114, 116, 118, 120) von mindestens einem von dem ersten und dem zweiten Dichtring (92, 94; 192, 194; 292, 294; 392, 394) eine Hartbeschichtung einschließt.

7. Dichtungsbaugruppenanordnung nach Anspruch 5 oder 6, wobei mindestens eine Oberfläche (98, 100, 114, 116, 118, 120) von mindestens einem von dem ersten und dem zweiten Dichtring (92, 94; 192, 194; 292, 294; 392, 394) eine Schmierschicht einschließt.

8. Dichtungsbaugruppenanordnung nach Anspruch 5, 6 oder 7, wobei eine Oberfläche (98, 100) von mindestens einem von dem ersten und dem zweiten Dichtring (92, 94; 192, 194; 292, 294; 392, 394) einen Steg (122; 222; 322) einschließt, der den anderen von dem ersten und dem zweiten Dichtring (92, 94; 192, 194; 292, 294; 392, 394) in Eingriff nimmt.

9. Dichtungsbaugruppenanordnung nach Anspruch 8, wobei eine weitere Oberfläche des anderen von dem ersten und dem zweiten Dichtring (292; 392) einen weiteren Steg (223; 323) einschließt, der die Oberfläche (98, 100) des mindestens einen von dem ersten und dem zweiten Dichtring (223; 323) in Eingriff nimmt.

10. Dichtungsbaugruppenanordnung nach einem der vorhergehenden Ansprüche, wobei die Schieberkeil-Schnittstelle (96; 196; 296; 396) von einer ersten und einer zweite angewinkelten Oberfläche (98, 100) bereitgestellt wird, die jeweils von dem ersten und dem zweiten Dichtring (92, 94; 192, 194; 292, 294; 392, 394) bereitgestellt werden, wobei die erste und die zweite angewinkelte Oberfläche (98, 100) relativ zu einer Achse des ersten und des zweiten Dichtrings (92, 94; 192, 194; 292, 294; 392, 394) geneigt sind.

11. Verfahren zum Abdichten zwischen zwei Bauteilen eines Gasturbinentriebwerks, wobei das Verfahren die folgenden Schritte umfasst:
Anordnen eines ersten und eines zweiten Dichtrings (92, 94; 192, 194; 292, 294; 392, 394) zwischen einem ersten und einem zweiten Drehschutz (80, 82); und
Vorspannen des ersten und des zweiten Dichtrings (92, 94; 192, 194; 292, 294; 392, 394) in einen Eingriff miteinander an einer Schieberkeil-Schnittstelle (96, 196, 296, 396) und in einen Eingriff mit dem ersten und dem zweiten Drehschutz (80, 82), um eine Dichtbaugruppe (84) zu bilden, wobei die Dichtbaugruppe (84) eine erste und eine zweite unter Druck stehenden Region (P1, P2) voneinander trennt,
**dadurch gekennzeichnet, dass**:
der erste Drehschutz (80) eine Außenluftdichtung einer Schaufel ist und der zweite Drehschutz (82) eine Statorleitschaufel ist, wobei eine von der ersten und der zweiten unter Druck stehenden Region (P1, P2) einem Kernströmungsweg (C) entspricht.

12. Verfahren oder Dichtungsbaugruppenanordnung nach einem der vorhergehenden Ansprüche, wobei die Statorleitschaufel in einem Turbinenbereich (24) angeordnet ist.

13. Verfahren oder Dichtungsbaugruppenanordnung nach Anspruch 11 oder 12, wobei eine Tasche (90) in mindestens einem von der Statorleitschaufel und der Außenluftdichtung der Schaufel bereitgestellt ist und die Dichtbaugruppe (84) in der Tasche (90) angeordnet ist.

14. Dichtungsbaugruppenanordnung nach Anspruch 13, wobei die Tasche (90) in einer äußeren Plattform (76) der Statorleitschaufel (62) bereitgestellt ist.

## Revendications

1. Agencement d'ensemble de dispositif d'étanchéité pour un moteur à turbine à gaz (20) comprenant :
des première et seconde structures non rotatives (80, 82) prévoyant respectivement des première et seconde faces (86, 88) ;
un ensemble d'étanchéité (84) comporte des première et seconde bagues d'étanchéité (92, 94 ; 192, 194 ; 292, 294 ; 392, 394) venant respectivement en prise avec les première et seconde faces (86, 88), les première et seconde bagues d'étanchéité (92, 94 ; 192, 194 ; 292, 294 ; 392, 394) venant en prise de manière coulissante l'une avec l'autre au niveau d'une interface cunéiforme coulissante (96 ; 196 ; 296 ; 396), dans lequel l'ensemble d'étanchéité (84) sépare des première et seconde zones sous pression (P1, P2) l'une de l'autre,
**caractérisé en ce que** :
la première structure non rotative (80) est un dispositif d'étanchéité à l'air externe de pale et la seconde structure non rotative (82) est une aube de stator, et l'une des première et seconde zones sous pression (P1, P2) correspond à un trajet d'écoulement central (C).

2. Agencement d'ensemble de dispositif d'étanchéité selon la revendication 1, dans lequel une poche (90) est prévue dans au moins l'une des première et seconde structures non rotatives (80, 82), l'ensemble d'étanchéité (84) étant disposé dans la poche (90).

3. Agencement d'ensemble de dispositif d'étanchéité selon la revendication 1 ou 2, dans lequel au moins l'une des première et seconde bagues d'étanchéité (92, 94 ; 192, 194 ; 292, 294 ; 392, 394) comporte des états libre et comprimé (110, 112) correspondant à des états non installé et installé, l'au moins une bague d'étanchéité (92, 94 ; 192, 194 ; 292, 294 ; 392, 394) ayant des extrémités libres (102) espacées les unes des autres à l'état comprimé (112).

4. Agencement d'ensemble de dispositif d'étanchéité selon la revendication 3, dans lequel l'une des extrémités libres (102) comporte une saillie (106) et l'autre des extrémités libres (102) comporte une fente (108) recevant la saillie (106).

5. Agencement d'ensemble de dispositif d'étanchéité selon une quelconque revendication précédente, dans lequel les première et seconde bagues d'étanchéité (92, 94 ; 192, 194 ; 292, 294 ; 392, 394) sont fabriquées à partir d'un alliage métallique.

6. Agencement d'ensemble de dispositif d'étanchéité selon la revendication 5, dans lequel au moins une surface (98, 100, 114, 116, 118, 120) d'au moins l'une des première et seconde bagues d'étanchéité (92, 94 ; 192, 194 ; 292, 294 ; 392, 394) comporte un revêtement dur.

7. Agencement d'ensemble de dispositif d'étanchéité selon la revendication 5 ou 6, dans lequel au moins une surface (98, 100, 114, 116, 118, 120) d'au moins l'une des première et seconde bagues d'étanchéité (92, 94 ; 192, 194 ; 292, 294 ; 392, 394) comporte un revêtement de lubrification.

8. Agencement d'ensemble de dispositif d'étanchéité selon la revendication 5, 6 ou 7, dans lequel une surface (98, 100) d'au moins l'une des première et seconde bagues d'étanchéité (92, 94 ; 192, 194 ; 292, 294 ; 392, 394) comporte une arête (122 ; 222 ; 322) venant en prise avec l'autre des première et seconde bagues d'étanchéité (92, 94 ; 192, 194 ; 292, 294 ; 392, 394).

9. Agencement d'ensemble de dispositif d'étanchéité selon la revendication 8, dans lequel une autre surface (98, 100) de l'autre des première et seconde bagues d'étanchéité (292 ; 392) comporte une autre arête (223 ; 323) qui vient en prise avec la surface (98, 100) de l'au moins une des première et seconde bagues d'étanchéité (223 ; 323).

10. Agencement d'ensemble de dispositif d'étanchéité selon une quelconque revendication précédente, dans lequel l'interface cunéiforme coulissante (96 ; 196 ; 296 ; 396) est prévue par des première et seconde surfaces inclinées (98, 100) respectivement prévues par les première et seconde bagues d'étanchéité (92, 94 ; 192, 194 ; 292, 294 ; 392, 394), les première et seconde surfaces inclinées (98, 100) étant inclinées par rapport à un axe des première et seconde bagues d'étanchéité (92, 94 ; 192, 194 ; 292, 294 ; 392, 394).

11. Procédé d'étanchéité entre deux composants de moteur à turbine à gaz, comprenant les étapes :
d'agencement des première et seconde bagues d'étanchéité (92, 94 ; 192, 194 ; 292, 294 ; 392, 394) entre des première et seconde structures non rotatives (80, 82) ; et
de sollicitation des première et seconde bagues d'étanchéité (92, 94 ; 192, 194 ; 292, 294 ; 392, 394) pour qu'elles viennent en prise l'une avec l'autre au niveau d'une interface cunéiforme coulissante (96, 196, 296, 396) et pour qu'elles viennent en prise avec les première et seconde structures non rotatives (80, 82) afin de former un ensemble d'étanchéité (84), dans lequel l'ensemble d'étanchéité (84) sépare des première et seconde zones sous pression (P1, P2) l'une de l'autre,
**caractérisé en ce que** :
la première structure non rotative (80) est un dispositif d'étanchéité à l'air externe de pale et la seconde structure non rotative (82) est une aube de stator, dans lequel l'une des première et seconde zones sous pression (P1, P2) correspond à un trajet d'écoulement central (C).

12. Procédé ou agencement d'ensemble de dispositif d'étanchéité selon une quelconque revendication précédente, dans lequel l'aube de stator est disposée dans une section de turbine (24).

13. Procédé ou agencement d'ensemble de dispositif d'étanchéité selon la revendication 11 ou 12, dans lequel une poche (90) est prévue dans au moins l'une de l'aube de stator et du dispositif d'étanchéité à l'air externe de pale, et l'ensemble d'étanchéité (84) est disposé dans la poche (90).

14. Agencement d'ensemble de dispositif d'étanchéité selon la revendication 13, dans lequel la poche (90) est prévue dans une plate-forme externe (76) de l'aube de stator (62).
